# EUROPEAN PATENT APPLICATION

(11) **EP 0 707 786 A1**
(43) Date of publication of application: **24.04.1996**
(21) Application number: 95307440.8
(22) Date of filing: 19.10.1995
(51) Int. Cl.: A01D 34/00

(54) **Mounting arrangement for a line cut-off**

(30) Priority: 20.10.1994 US 326730
(71) Applicant: Black & Decker Inc., Newark Delaware 19711 (US)
(72) Inventor: Prosper, Jacob, Brockville, Ontario K6V 6Z8 (CA); Atos, Sheldon, Ontario K0E 1R0 (CA); Bennett, Christopher, Whitby, Ontario L1R 2A8 (CA)
(74) Representative: Moffat, John Andrew

(57) **Abstract**

A string trimmer (10) apparatus incorporates a mounting arrangement for securing a line cut-off blade (52) to a guard (20) of the trimmer apparatus without the need for rivets, threaded screws or the like. The string trimmer apparatus includes a first housing half and a second housing half. The first housing half includes a guard portion having a slot (44) integrally formed therein adapted to receive slidably therein a line cut-off blade. The slot has a depth sufficient to accept a major portion of the blade such that only a cutting edge (54) of the blade is exposed once fully inserted in the slot. The blade is maintained captively within the slot when the first housing half is secured to the second housing half. The first housing half includes a wall portion (58) which overlies a portion of the length of the cut-off blade such that when the first housing half is fixedly secured to the second housing half the cutting edge of the blade is caused to dig or "bite" into the wall portion. In this manner the cut-off blade is captively maintained within the slot once the two housing halves are assembled together without the need for rivets, threaded screws or the like. A sloped wall portion (46) of the guard also guides a cutting line gradually over an inner surface of the guard after the line has been cut.

## Description

This invention relates to string trimmers, and more particularly to a string trimmer including a line cut-off blade which is captively held within a slot in a portion of a guard of the string trimmer without the use of rivets, threaded screws or other like fasteners when the string trimmer is assembled.

String trimmers are used in a wide variety of applications to trim vegetation such as grass, weeds, etc. in areas closely adjacent walls of buildings, fences, shrubs,' etc. where other forms of vegetation cutters such as lawn mowers have difficulty cutting or are unable to cut. Such string trimmers typically include a handle portion which is graspable with one or both hands of the operator, a neck or intermediate portion and a base portion. Each of the handle assembly, neck portion and base portion are typically molded from plastic using a two-piece, clam shell-like construction arrangement. Thus, during assembly at a factory or other like facility, the string trimmer is assembled by securing two halves of the housing together, which together form the housing for the entire string trimmer.

With conventional string trimmers a line cut-off blade is typically secured in a guard portion of the housing. The guard portion is typically integrally formed with the base assembly of the string trimmer from plastic and protrudes generally transversely of the base assembly to act as a partial guard for the rotating cutting line. The cut-off blade is typically secured via rivets or threaded screws to a portion of the plastic guard during assembly of the string trimmer at the factory or other like facility.

While the above mentioned method of securing the cut-off blade to the guard has proven satisfactory to trim the cutting line during use of the trimmer and to ensure that the cutting line length does not exceed a predetermined maximum length, this mounting arrangement still provides manufacturing drawbacks. For one, additional manufacturing steps are required to rivet or otherwise secure the cut-off blade to the guard via the rivets or threaded screws.

This introduces additional cost to the manufacturer of the overall string trimmer as well as requiring additional component parts in the form of rivets, threaded screws or the like. It would be even more cost effective from a manufacturing standpoint if the line cut-off blade could somehow be secured to the guard of the string trimmer without the use of rivets, threaded screws or other like securing implements which need to be secured through an additional manual assembly step. Such a mounting arrangement would also reduce the overall cost of manufacture of the string trimmer by reducing the number of individual component parts (i.e., by eliminating the rivets or threaded screws).

Accordingly, it is a principal object of the present invention to provide a string trimmer apparatus which includes a guard having a cut-off blade positioned therein in a manner which does not require the use of rivets or other threaded screws to maintain the cut-off blade secured to the guard.

It is yet another object of the present invention to provide a string trimmer having a guard which includes structure which is capable of slidably accepting a portion of a line cut-off blade therein during assembly, and which causes the cut-off blade to be captively held within a portion of the guard when a second housing portion is secured to a first housing portion such that no rivets or other like threaded securing members are needed to maintain the cut-off blade secured to the guard.

It is still another object of the present invention to provide a string trimmer having a housing formed in two parts, in which a slot is formed in a first one of the housing parts which is adapted to slidably receive a major portion of a line cut-off blade therein, and where a second housing portion is securable to the first housing portion in a manner which causes a portion of the cut-off blade to be captively held within the slot without the use of rivets, threaded screws, etc.

It is still a further object of the present invention to provide a string trimmer apparatus having a two-piece housing assembly wherein a first half of the housing assembly may be molded from a suitably strong plastic to form a slot into which a line cut-off blade may be slidably inserted. It is a further object to provide a second housing portion is securable to the first housing portion in a manner which causes a cutting edge of the line cut-off blade to dig into or "bite" into a surface of the second housing portion. In this manner the line cut-off blade could be captively maintained within the slot once the two housing halves are secured together without the need for rivets or threaded screws.

The above and other objects are accomplished by a string trimmer apparatus having a line cut-off blade mounting arrangement in accordance with a preferred embodiment of the present invention. The string trimmer apparatus-includes a base portion which is constructed in two halves in a clam shell-like configuration. Each housing portion includes a guard portion formed therewith. When the two housing halves are secured together a guard is formed which protrudes generally transversely of the base portion.

The guard portion of a first one of the housing halves includes a lip portion which includes a slot. The slot is dimensioned to be able to slidably receive therein a major portion of a line cut-off blade. Once a line cut-off blade is slidably inserted into the slot such that its cutting edge is protruding outwardly of the slot, the second housing portion is secured to the first housing portion. The second housing portion is configured such that a small section overlaps a portion of the slot formed in the first housing portion, and thereby a portion of the cut-off blade. When the second housing portion is secured to the first housing portion the cutting edge of the line cut-off blade digs into or "bites" into a small section of the second housing portion. The second housing portion, when secured to the first housing portion, thus captively maintains the line cut-off blade securely within the slot without the need for rivets, threaded screws or the like. Accordingly, the overall simplicity of manufacture of the string trimmer is increased since the added step of riveting or likewise securing the line cut-off blade to a portion of the guard is eliminated. This further reduces the overall cost of manufacture of the line trimmer since no rivets, threaded screws or the like are required to secure the line cut-off blade to the guard.

The various advantages of the present invention will become apparent to one skilled in the art by reading the following specification and subjoined claims and by referencing the following drawings in which:
Figure 1 is a perspective view of a string trimmer apparatus incorporating a mounting blade arrangement in accordance with a preferred embodiment of the present invention;
Figure 2 is a perspective view of a portion of the guard of a first housing half of the housing of the string trimmer shown in Figure 1 as viewed in accordance with directional arrow 2 in Figure 1;
Figure 3 is a perspective view of the guard portion of the first housing half shown in Figure 2 with a line cut-off blade slidably disposed within a slot formed in a lip portion of the guard;
Figure 4 is a perspective view of the line cut-off blade shown in Figure 3 being captively maintained within the slot in the first housing half when the second housing half is secured to the first housing half;
Figure 5 is a view of the line cut-of f blade in accordance with directional arrow 5 in Figure 4 showing a blade captively maintained within the slot in the first housing half by a portion of the guard of the second housing half; and
Figure 6 is a cross-sectional view in accordance with section line 6-6 in Figure 5 showing the line cut-off blade resting within the slot in the guard portion of the first housing portion, and also showing a sloped surface which helps guide a cutting line over an interior surf ace of the guard of the trimmer as the cutting line is cut and advanced rotatably by a motor of the string trimmer apparatus.

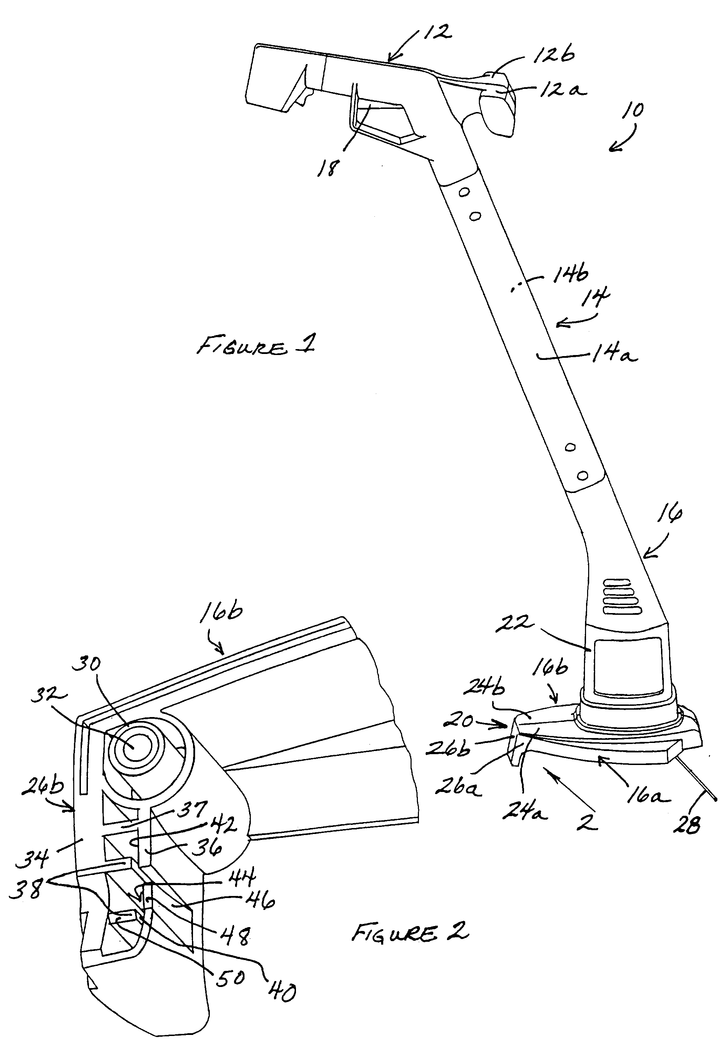

Referring to Figure 1, there is shown a string trimmer apparatus 10 incorporating a line cut-off mounting blade arrangement in accordance with a preferred embodiment of the present invention. The string trimmer apparatus 10 generally includes a handle assembly 12, a neck or intermediate assembly 14 and a base assembly 16. Each of the handle assembly 12, intermediate assembly 14 and base assembly 16 are constructed in a two-piece, clam shell-like configuration. Thus, the handle assembly 12 is comprised of two half portions 12a and 12b, the intermediate assembly 14 is comprised of two half portions 14a and 14b and the base assembly 16 is comprised of two half portions 16a and 16b.

The half portions 12a and 12b of the handle assembly 12. When secured together via threaded screws or the like, form a graspable handle portion which the operator may grasp with one or both hands to maneuver the string trimmer apparatus 10 during use. A trigger 18 is included for turning on and off a motor disposed within the base assembly 16. The intermediate assembly 14 and base assembly 16 are each assembled by securing their respective component halves 14a, 14b and 16a, 16b together via threaded screws or other like fasteners.

With further reference to Figure 1, the base assembly 16 includes a guard 20 which protrudes generally transversely of a main body portion 22 of the base assembly 16. The guard 20 is comprised of a first guard portion 24a and a second guard portion 24b. Each of the guard portions 24a and 24b include a lip portion 26a and 26b. When the two housing halves 16a and 16b are assembled together the resulting guard 20 operates to partially shield a cutting line 28 which is housed on a cutting line spool (not shown) partially within the guard 20 and driven rotationally by a motor disposed within the main body portion 22.

With most prior developed string trimmer designs, a cutting blade is secured to a lip portion of the guard by conventional rivets, threaded screws or the like such that when the cutting line 28 is driven rotationally, the cutting blade will cut the cutting line 28 if the length of the cutting line 28 extends past the lip portion of the guard 20. While effective for controlling the length of the cutting line 28, this mounting arrangement for the line cut-off blade still requires the added manufacturing step of securing the line cut-off blade to the lip portion of the guard via one or more rivets or other threaded screws. As will be appreciated, this, introduces an additional manufacturing step which increases the overall cost of manufacture of the string trimmer. The cost of manufacture is further increased by the requirement of additional components parts (i.e., the rivets or threaded screws) which are required to secure the line cut-off blade to the guard.

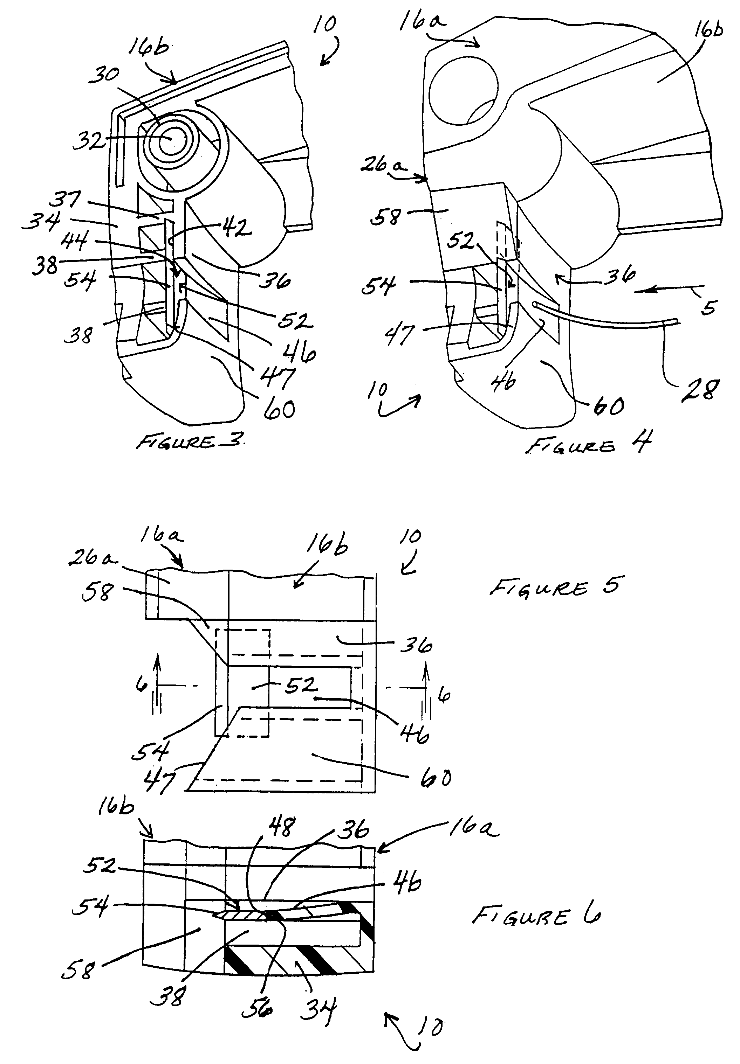

Referring now to Figure 2, the line cut-off blade mounting arrangement in accordance with the present invention will be described. The housing half 16b includes a boss portion 30 having a bore 32 therein. The guard portion 26b includes an outer portion 34 spaced apart from an inner portion 36 in part by a reinforcing rib 37 which is integrally formed with the outer portion 34 and the inner portion 36. A pair of raised shoulder portions 38 are also integrally formed with the outer portion 34 and are of a predetermined height such that an upper edge surface 40 of each is spaced apart from an inner surface 42 of the inner portion 36 to form a slot 44. The slot 44 has an overall height which is sufficient to allow a line cut-off blade to be inserted therein.

With further reference to Figure 2, the inner portion 36 includes a sloped wall portion 46 having an upper edge surface 48. The distance between the upper edge surface 48 and an upper surface 50 of each raised shoulder portion 38 is such that when a line cut-off blade is inserted therein a major portion of the blade is held within the slot 44 in a secure manner.

Referring now to Figure 3, the second housing half 16b is shown with a line cut-off blade 52 inserted within the slot 44. The major portion of the body of the line cut-off blade 52 is disposed within the slot 44 such that only a cutting edge portion 54 of the blade 52 is exposed above the slot 44. With brief reference to Figures 5 and 6, a bottom edge portion 56 of the line cut-off blade 52 rests against the upper edge surface 48 of the sloped wall portion 46 when the line cut-off blade 52 is fully inserted within the slot 44.

With reference to Figure 4, when the first housing half 16a is secured to the second housing half 16b a sloped corner portion 58 of the first housing half 16a overlaps a portion of the length of the line cut-off blade 52. When the first housing portion 16a is secured to the second housing portion 16b via a threaded screw or the like, the edge surface 54 of the line cut-off blade 52 is caused to dig in or "bite" into the sloped corner portion 58. In this manner the sloped corner portion 58 of the first housing portion 16a captively retains the line cut-off blade 52 within the slot 44 such that no rivets, threaded screws or other like securing members are required to hold the line cut-off blade 52 to the guard 20.

The slot 44 in the second housing portion 16b is easily formed with a suitable mold as an integral portion of the second housing portion 16b. Thus, the additional assembly step of manually riveting the line cut-off blade 52 to a portion of the guard is eliminated. Additionally, the need for rivets or other threaded screws to secure the line cut-off blade is eliminated. Thus, it will be appreciated that the arrangement disclosed herein for securing the line cut-off blade represents a significant improvement in the ease of manufacture of the string trimmer apparatus 10 as well as helping to reduce the overall cost of manufacture of the string trimmer apparatus. Since rivets or other threaded screws are not required to hold the line cut-off blade 52 to the guard, there is little chance that the line cut-off blade will become loose relative to the guard after prolonged use of the string trimmer apparatus 10.

With further brief reference to Figures 4-6, the lip portion 26b of the guard portion 24b includes the sloped wall portion 46 which guides a freshly cut end of the cutting line 28 (shown in Figure 4) over an inner surface 60 of the inner portion 36. A sloped edge portion 47 of the inner portion 36 also helps to guide the cutting line 28 toward the cutting edge 54 of the cut-off blade 52 immediately after a new section of cutting line has been advanced. In this manner, once a trimming line is freshly cut by the line cut-off blade 52, the trimming line will not abruptly bump against a shoulder portion or other corner which would otherwise be formed if the sloped wall portion 46 were not included. This feature further helps to prevent premature wear of the inner surface 60 of the lip portion 26b since the cutting line 28 gradually rides up the sloped wall portion 46 without encountering any abrupt shoulder portions or protrusions.

It will be appreciated that while the blade mounting arrangement of the present invention has been described in connection with a string trimmer apparatus, the teachings herein could easily be adapted for use with other vegetation cutters which require a cutting blade to be held securely to a housing or frame portion.

Those skilled in the art can now appreciate from the foregoing description that the broad teachings of the present invention can be implemented in a variety of forms. Therefore while this invention has been described in connection with particular examples thereof, the true scope of the invention should not be so limited since other modifications will become apparent to the skilled practitioner upon a study of the drawings, specification and following claims.

## Claims

1. A string trimmer apparatus comprising:
independent first and second housing portions each including a guard portion;
a cut-off blade for trimming a cutting line during use of the trimmer apparatus;
a slot formed in said first guard portion of said first housing portion, said slot being operable to slidably receive a major portion of said cut-off blade such that a majority of said cut-off blade is disposed within said slot with substantially only a cutting edge portion of said cut-off blade being exposed; and said second housing portion being adapted to be secured to said first housing portion such that a section of said second housing portion overlaps a portion of said cutting edge of said cut-off blade to cause said cutting edge to dig into said second housing portion, which thereby causes said cut-off blade to be captively retained within said slot in said first housing portion.

2. The apparatus of Claim 1, wherein said second housing portion further comprises:
an inner wall portion having a sloped wall portion sloping downwardly into said slot to form a continuous path over which a newly cut portion of said cutting line may be drawn after being cut by said cut-off blade.

3. The apparatus of Claim 1, wherein said first housing Portion includes a sloped corner portion sloping downwardly toward said cutting edge portion of said cut-off blade to help guide said cutting line toward said cutting edge portion of said cut-off blade during operation of said string trimmer apparatus.

4. The apparatus of Claim 1, wherein said second housing portion further comprises:
a sloped wall portion sloping downwardly toward said cutting edge of said cut-off blade; and
wherein said first housing portion includes a sloped corner portion sloping downwardly toward said cutting edge of said cut-off blade, said sloped corner portion and sloped wall portion each operating to guide said cutting line toward said cutting edge portion of said cutoff blade during operation of said string trimmer.

5. A string trimmer apparatus comprising:
independent first and second housing portions, said first housing portion including a first guard portion and said second housing portion Including a second guard portion;
a cut-off blade for trimming a cutting line during use of the trimmer apparatus; and a slot formed in said second guard portion of said second housing portion, said slot being operable to slidably receive at least a portion of said cut-off blade such that a portion of said cut-off blade is disposed within said slot with substantially only a cutting edge portion of said cut-off blade being exposed.

6. An outdoor power tool for trimming vegetation, said outdoor power tool comprising:
a first housing section;
a second housing section having a guard portion;
a slot formed in said guard portion;
a cut-off blade disposed within said slot for trimming a cutting line of said outdoor power tool; and
said first housing section operable to at least partially mate with said second housing section such that a portion of said first housing section overlaps a portion of an edge surface of said cut-off blade when said cut-off blade is disposed within said slot, to thereby captively hold said cut-off blade within said slot once said first housing section is secured to said second housing section.

7. The outdoor power tool of Claim 6, wherein said second housing section includes a sloped edge portion sloping downwardly toward said edge portion of said cut-off blade when said cut-off blade is disposed within said slot, said sloped edge portion operating to help guide a portion of said cutting line toward said edge surface during operation of said outdoor power tool.

8. The outdoor power tool of Claim 6, wherein said first housing section Includes a sloped corner portion, said sloped corner portion operating to help guide a portion of said cutting fine toward said cutting edge of said cut-off blade during operation of said outdoor power tool.

9. The outdoor power tool of Claim 6, wherein said guard portion includes an inner portion having a sloped wall portion sloping downwardly toward said slot such that an upper edge surface of said sloped wall portion supports a bottom edge portion of said cut-off blade, thereby forming a generally smooth, continuous path over which a portion of said cutting line may be drawn after being trimmed by said cut-off blade.

10. A string trimmer apparatus comprising:
a first housing half having a first guard portion depending therefrom;
a second housing half securable to said first housing half and including a second guard portion depending therefrom;
said second guard portion having an outer portion and an inner portion, said outer portion including a plurality of raised shoulder portions which, in co-operation with said inner portion, at least partially define a slot;
a cut-off blade disposed within said slot such that a cutting edge surface of said cut-off blade is exposed above said raised shoulder portions when said cut-off blade is fully inserted within said slot; and
said first guard portion including a sloped corner portion operable to overlap a portion of said cutting edge surface of said cut-off blade when said first housing half is secured to said second housing half to thereby captively retain said cut-off blade within said slot without completely covering said cutting edge surface.

11. The apparatus of Claim 1 0, further comprising:
a cutting line; and
wherein said sloped corner portion of said first guard portion is sloped downwardly toward said cutting edge surface to help guide said cutting line toward said cutting edge surface during operation of said string trimmer apparatus.

12. The apparatus of Claim 10, further comprising:
a cutting line; and
wherein said second guard portion includes a sloped edge portion sloping downwardly toward said cutting edge surface of said cut-off blade to help guide said cutting line toward said cutting edge surface of said cut-off blade during operation of said string trimmer.

13. The apparatus of Claim 1 0, further comprising: a cutting line;
wherein said inner portion includes a sloped wall portion sloping downwardly toward said slot such that an upper edge surface of said sloped wall portion forms a support surface for a bottom edge portion of said cut-off blade; and
wherein said sloped wall portion forms a smooth, gradually curving surface over which a newly cut portion of said cutting line may be drawn immediately after being cut by said cutting edge surface of said cut-off blade.

14. A method for securing a cut-off blade to an outdoor vegetation trimming tool, said method comprising the steps of:
forming a housing portion having a slot generally radially in line with a path of travel of a cutting element driven rotationally by said tool; and
inserting a cut-off blade Into said slot such that a cutting edge portion of said blade is generally In line with said path of travel of said cutting implement.

15. The method of Claim 14, further comprising the step of: securing a mating housing portion to said housing portion such that a portion of said mating housing portion overlaps a portion of said cut-off blade, to thereby captively retain said cut-off blade in said slot.

16. A method for securing a cut-off blade to an outdoor power tool without the use of external fastening elements extending through the cut-off blade, said method comprising the steps of:
forming a first housing portion having a depending corner portion;
forming a second housing portion having a depending portion, said depending portion having a slot formed therein for slidably receiving a cut-off blade in a manner such that a cutting edge surface of said cut-off blade is exposed when said cut-off blade is fully, slidably inserted within said slot; and
securing said first housing portion to said second housing portion such that said depending corner portion overlaps a portion of said cutting edge surface of said cut-off blade to thereby captively retain said cut-off blade within said slot without the use of independent fastening elements extending through any portion of said cut-off blade.

17. The method of Claim 16, further comprising the step of forming a sloped wall portion in said second housing section such that an upper edge surface of said sloped wall portion is used to support a bottom edge portion of said cut-off blade in a manner forming a smooth, continuous path of travel for a cutting line after said cutting line has been trimmed by said cutting edge surface of said cut-off blade.
